**Europäisches Patentamt**

**European Patent Office**

**Office européen des brevets**

(19)

(11) Publication number: **0 060 946**

**A1**

(12) **EUROPEAN PATENT APPLICATION**

(21) Application number: **81301246.5**

(22) Date of filing: **24.03.81**

(51) Int. Cl.³: **A 01 K 9/00**

(43) Date of publication of application:
**29.09.82 Bulletin 82/39**

(84) Designated Contracting States:
**AT BE CH DE FR GB IT LI LU NL SE**

(71) Applicant: **Nixon, Alexander Francis**
**Nicholl Nixon (Engineers) Limited Romford Road**
**Astonfields Industrial Estate**
**Stafford, Staffs. ST16 3EW(GB)**

(71) Applicant: **Nicholl, Anthony James**
**Nicholl Nixon (Engineers) Limited Romford Road**
**Astonfields Industrial Estate**
**Stofford, Staffs. ST16 3EW(GB)**

(72) Inventor: **Nixon, Alexander Francis**
**Nicholl Nixon (Engineers) Limited Romford Road**
**Astonfields Industrial Estate**
**Stafford, Staffs. ST16 3EW(GB)**

(72) Inventor: **Nicholl, Anthony James**
**Nicholl Nixon (Engineers) Limited Romford Road**
**Astonfields Industrial Estate**
**Stofford, Staffs. ST16 3EW(GB)**

(54) **Animal feeding apparatus.**

(57) An animal feeding apparatus for mixing milk powders and water, comprising a water tank, hopper, mixing mechanism, insulated storage container, means of controlling the liquid in the said storage container and tubes connected to teats for drawing the liquid out of the container.

A mixing chamber (62) detachable from its housing (63) and an insulated container easily removed from the metal cabinet so as to facilitate cleaning by replacement of these parts by similar ones provided, as spares, with the Apparatus.

A hopper fixed to a motor table by means of two brackets and a locating hole; this enables an easy removal of the hopper and motor table from the metal cabinet for routine maintenance and repair.

./...

Croydon Printing Company Ltd.

FIG. 4

-I-

## Animal Feeding Apparatus.

The invention relates to an animal feeding apparatus which
mixes milk powder and water for feeding to animals only.
When activated,the milk powder is augered out of the hopper,
at the same time,water runs into the inside top rim of a
funnel made of plastic material; both powder and water then
proceed from that point to a chamber where vigorous mixing
takes place. The mix drops into an insulated container out
of which come two  or more flexible tubes that pass to the
exterior of the apparatus; these tubes are each connected
to a rubber teat which are fitted to the side of the animals
pen,allowing them to suck the mixture on an ad-libitum basis.

The hopper attachment and the motor table(which houses the
auger drive motor,mixer motor and water solenoid valve) are
easyly removable from each other and from the rest of the
apparatus.

Other animal feeding apparatus are known in accordance with
prior art portion of claim I in which the water and milk
powder are mixed in the same vessel from which the resulting
liquid is withdrawn by means of a pipe connected to a teat.
The hopper is not easily removable from the rest of the apparatus nor can the motor mixing the powder and water,the auger
drive motor and water valve be removed from the apparatus as
one unit.

-2-

With an apparatus of this kind,hygenic conditions are difficult to maintain because the parts involved in the mixing and storage of milk are not easily detached for cleaning. This can cause a build-up  of harmful organisms which may adversly affect the health of the animals.

The difficulty to remove the hopper,auger drive motor,mixer motor and water valve as one unit or separately from the rest of the apparatus,makes it more difficult to get these parts serviced regularly.

The invention as claimed is intended to provide a remedy. It solves the problem of how to design an apparatus which is hygenic and easy to maintain in good working order,thereby averting the risks of disease to animals and machine malfunction.

The advantages offered by the invention are mainly that the mixing of powder and water together with the storage of the resulting mixture in an insulated container,enable animals to draw liquid when and as required. The design of the mixer and insulated storage container,make them easily removable for cleaning.

The modular construction of the hopper attachment and motor table,make it an extremly easy machine to service.

So that the invention may be more clearly understood,reference will now be made to the accompanying drawings in which:

Figure I illustrates the mixing sequence.

Figure 2 illustrates the water system of the invention and components situated in that one section of the cabinet.

Figure 3 illustrates the hopper,motor table and insulated container(with all attachments).

Figures 4, 5 and 6 illustrate a more detailed view of the motor table and hopper base.

The following text  refers to Figure I.

-3-

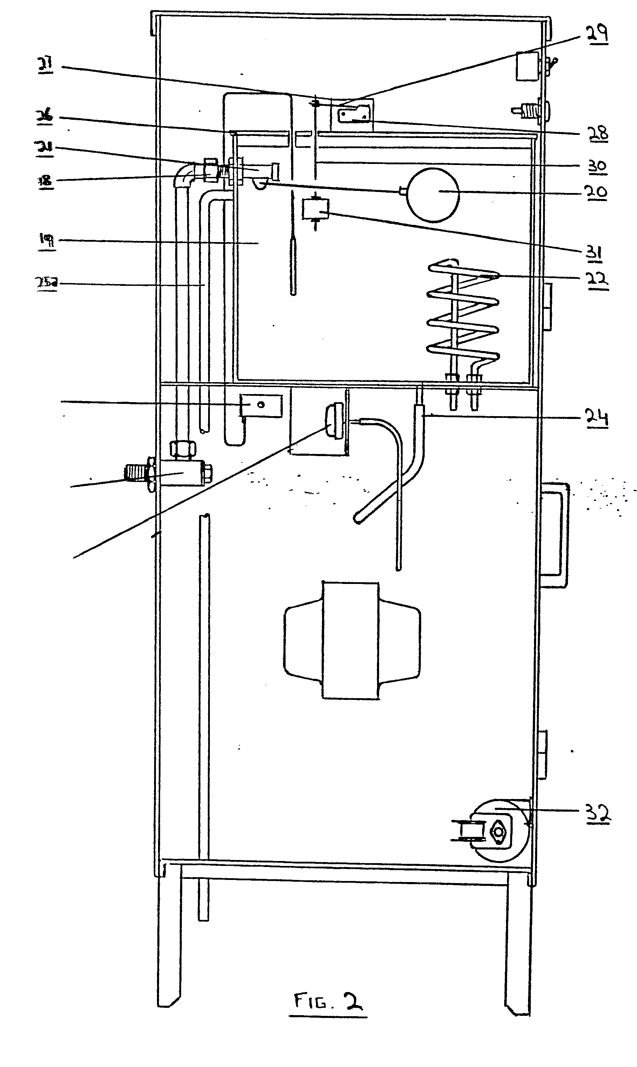

The mixing sequence is activated as follows: the pressure
switch I is de-pressurised with the switch mechanism in a
closed circuit situation; this allows a IIO volt A.C
supply in paralell to activate the solenoid valve 2,the
auger drive motor 3 (milk powder) and the mixer motor 4.
Powder is dispensed into the plastic funnel 5 by means
of an auger 6 which lies at the bottom of the hopper.7;
at the same time as the powder is being dispensed,warm
water leaves the metal pipe 8 touching the inside top rim
of the funnel 5 and causes the warm water to swirl round
the interior of the said funnel 5.
As the powder and water drop into the mixing chamber 9, a
plastic paddle IO activated by the mixer motor 4, vigorously
mixes the powder and water. The resulting mix drops into
a plastic insulated container II by means of a flexible
tube I2. When the mix reaches its pre-determined level,
air pressure within the stainless steel tube I3 operates
the pressure switch I thereby placing the switch mechanism
in an open circuit situation and the mixing is stopped.
The mix within the plastic insulated container II is
drawn off by the animal by sucking at a teat I4 which is
connected to the insulated container II by a flexible
tube I5 at the end of which there is a non-return valve
I6.
When the mix in the insulated container II drops below a
pre-set level,the pressure switch I is de-pressurised
and the sequence is re-commenced.
The following text refers to figure 2.
Water,either from the mains or from a tank,enters the
machine through a filter I7 and proceeds to the outlet
point I8. Water is held captive in a plastic tank I9 and
as the water level rises,so does a ball float 20 until
the inlet valve 2I is closed thus preventing further
water entering the tank I9. The element heater 22 heats
the water in the tank I9 to a temperature set by a ther-

-4-

mostat 23. An outlet pipe 24 takes the heated water to a solenoid valve(Fig I/2). The pressure switch 25 is situated below the water tank and is fixed to the side of the tank support bracket. An overflow(25 a) is incorporated to the water tank I9.

The plastic water tank I9 has a lid 26 of the same material and th one side of this lid 26 there is a small bracket 27 which has fastened to it a micro-switch 28. To the arm 29 of the switch 28 is attached a thin metal rod 30 ,which penetrates the lid 26 and has a float 3I attached to its other end. If for any reason the water level in the tank I9 drops to a certain level above the water outlet poin 24, the switch 28 will break the power supply to the element heater 22, the circulation fan 32 and components 2, 3 and 4 in Figure I. The "no water" neon will light-up on the instrument panel indicating that the water level in the tank I9 is below the required limit. Once the water level in the tank I9 is back to normal, the float 3I rises,causing the arm 29 to put the switch to the on possition and reestablish normal electricity supply to the element heater 22,the circulation fan 32 and components 2,3 and 4 as shown in Figure I.

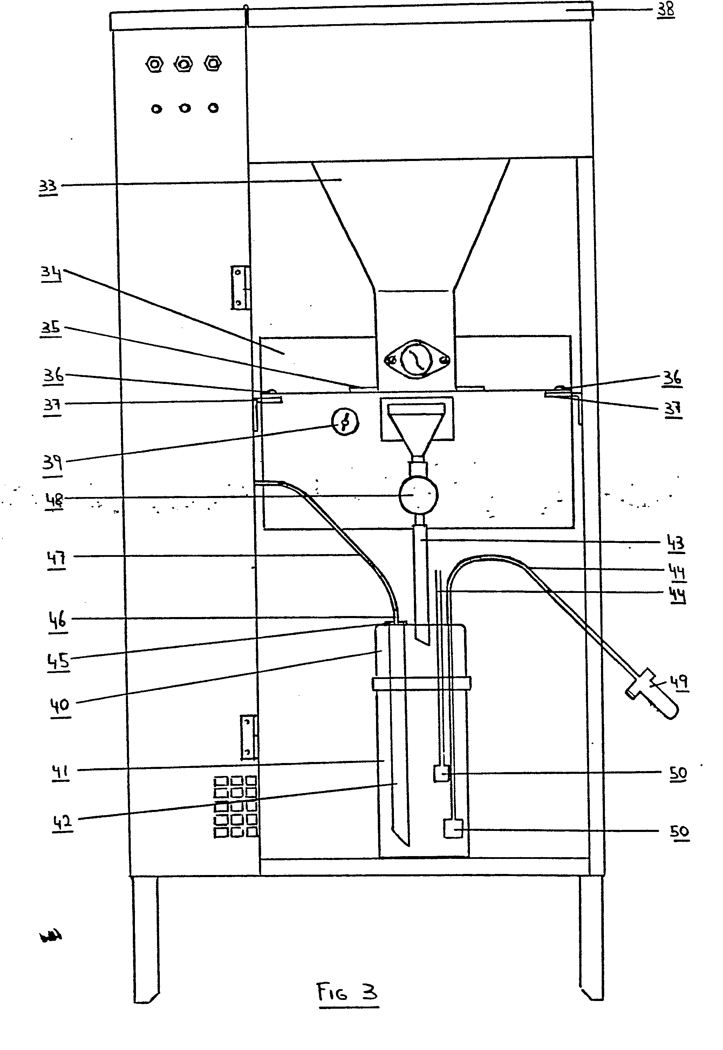

The following text refers to figure 3.

The hopper 33 is secured to the metal motor table 34 by two brackets 35 placed either side of the hopper base . The motor table 34 is secured to the metal cabinet(on the inside) by a screw through the slot 36 which fastens to a metal bracket 37. The metal bracket 37 is welded to the inside of the cabinet and serves to support and fasten the metal motor table 34.

The hopper 33 and the motor table 34 may be lifted out of the metal cabinet,as one unit or separately simply by removing the two screws placed in the slots 36,disconecting the water supply to the solenoid valve 39 and removing the electrical connections to the auger drive motor(Figure I item 3),mixer motor(Figure I item 4) and solenoid valve (Figure I,item 2).

Once this is done and the lid 38 to the cabinet is opened, the hopper 33 and the motor table 34, may be lifted out as one unit or separately.

The screw on lid 40 has three or more perforations to it; One perforation is to fit a stainless steel tube 42, the other fits a flexible delivery tube 43 and the remaining perforations,allow tubes 44 to enter the insulated container 4I.

The purpose of the insulated container 4I is to keep the mix warm. The stainless steel tube 42 has a rim which allows it to "sit" on the lid 40 while the greater part of its body remains in the insulated container 4I.

Just above the rim 45 is the neck 46 over which is tightly fastened a clear flexible tube 47. The other end of this flexible tube 47 is tightly secured to the neck of the pressure switch( Figure I, item I).

The mix leaves the mixing chamber 48 via a plastic delivery tube 43 and is deposited in the plastic insulated container. The mix is "drawn off" at a teat 49,suction causes the mix to rise up the plastic tube 44; the mix can only travel in the direction of the teat 49 as the base of the plastic tubes 44 are each fitted with a non return valve 50.

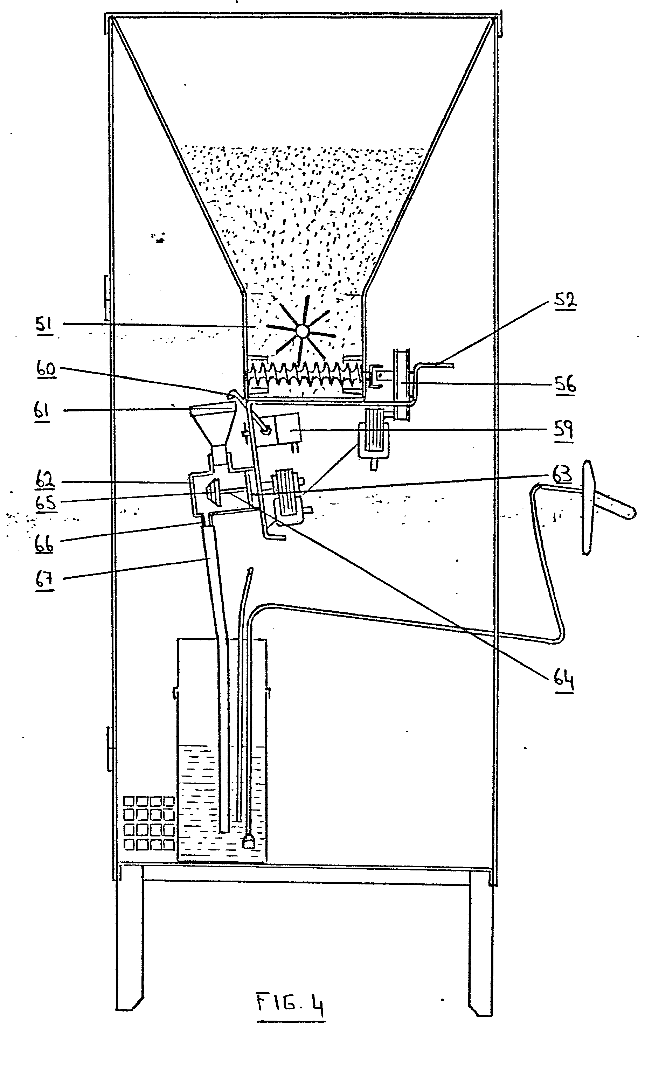

Once the tubes 44 and the stainless steel tube 42 have been removed from the insulated container 4I, the mixing chamber 48 ,by means of a gentle outward pulling action, can be separated from its housing. This allows the operator to exchange the original set composing the funnel(Figure 4,item 6I) ,the mixing chamber 48,delivery tube 43 and insulated plastic container 4I, for a spare set of these which are provided with each machine.

-6-

The following text refers to figure 4.

The auger drive motor 56 is fastened to the motor table 52 by means of four screws.

From the solenoid valve 59 there is a metal pipe 60 which touches the inside top rim of the funnel 6I; The neck at the bottom of the funnel 6I fits tightly into the top section of the mixing chamber 62,allowing water and powder to pass into the chamber proper without restriction or loss to the exterior of powder and water from the funnel 6I and chamber 62.

This cylindrical mixing chamber 62 fits onto a plastic housing 63 causing a seal. From out of the centre of the plastic housing 63, there extends a metal shaft 64 at the end of which there is a plastic paddle which revolves and serves to mix the powder with the water; the plastic paddle is shown as item 65. A neck 66 serves to drain the mix from mixing chamber 62. To this neck 66 there is fitted a hollow flexible tube 67 which conveys the mix to the plastic insulated container below.

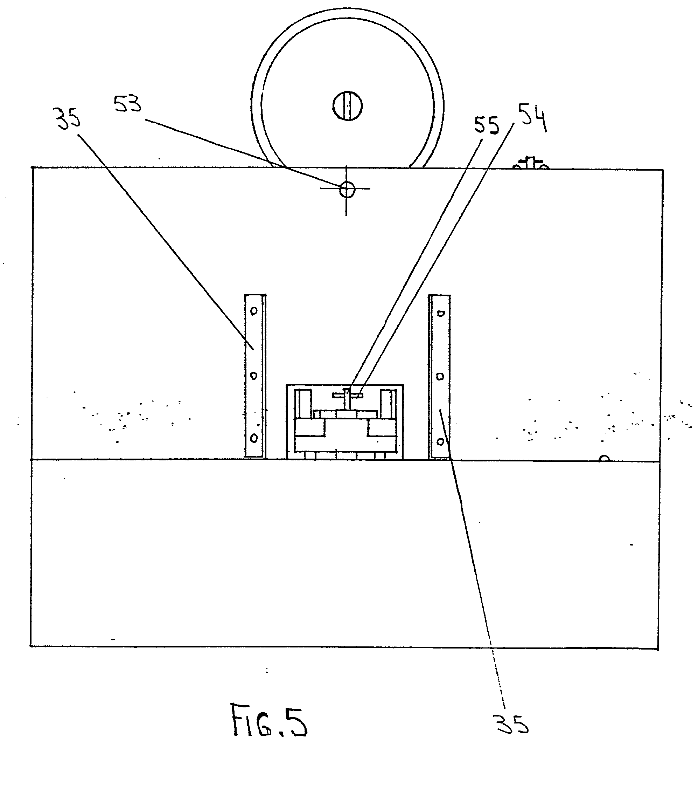

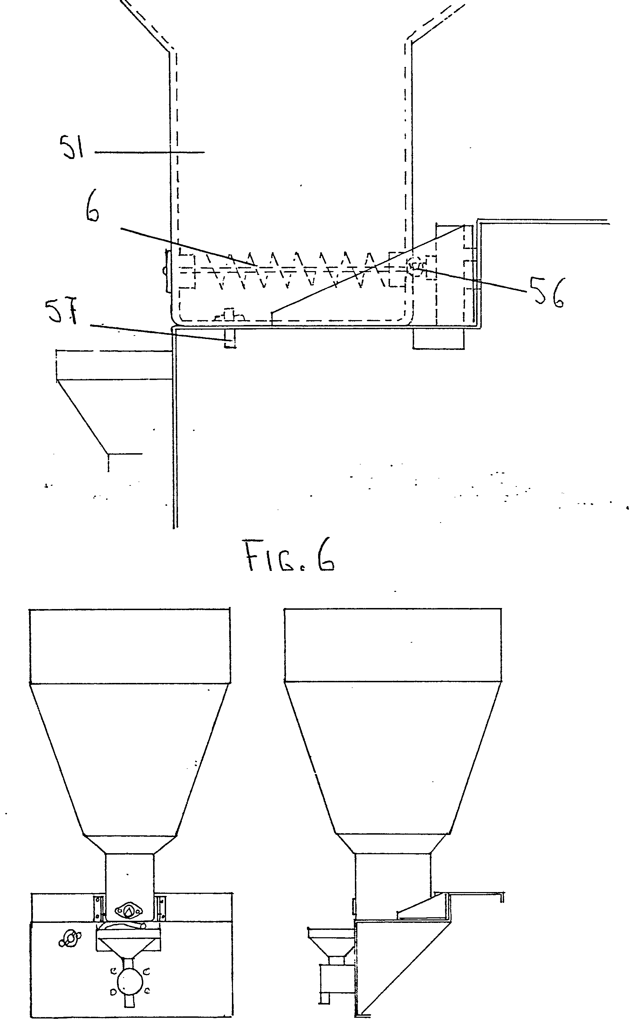

The following text refers to Figures 5 and 6.

Figure 5 shows the motor table 52, two right angled brackets secured to the motor table 52. These two brackets 35 are equidistant from the centre of the auger drive shaft 55. On the motor table 52 there is a hole 53 which is equidistant from the similar point on both brackets 35.

Figure 6 shows a drive fork 56 situated at the drive end of the auger; the auger drive pin 54(Figure 5) locks into place with a drive fork 56.

The locating pin 57 once firmly inserted in the locating hole 53,secures the hopper base 5I to the motor table 52. To release the hopper 5I from the motor table 52,all that is required is slight backward tilting motion of the

-7-

hopper 5I so that the locating pin 57 is outside the locating hole 53. The hopper base 5I can then move slightly forward and the fork 56 is freed from the drive pin 54.

-I-

What we claim is:

I. Animal feeding apparatus comprising a hopper,an auger to convey milk powder to a mixing chamber,means of supplying water to the mixing chamber,an insulated container receiving the water/powder mix via a tube from the mixing chamber and containing means to ensure at least a minimum level of liquid in the insulated container;a teat connected,via a tube to the insulated container.

2. Apparatus as claimed in claim I,wherein the mixing chamber,for the milk powder and water,consists of a cylindrical chamber in the interior of which there is a paddle at the end of a shaft;this mixing chamber being detachable from its housing.

3. Apparatus as claimed in claim I and 2 wherein water enters a point above the mixing chamber known as the funnel, by means of a metal spout.

4. Apparatus as claimed in claim I wherein the mixing of the milk powder and water is separate from the point from which the resulting mix is finally withdrawn.

5. Apparatus as claimed wherein the level of liquid in the insulated container is controlled by means of a hollow metal probe linked to a pressure switch by a flexible tube.

6.Apparatus as claimed wherein the hopper and motor table are fixed together to form one unit,and that this unit is removable from the metal cabinet, in one section or two.

7. Apparatus as claimed in claim 6 wherein the motor table has an auger drive motor,a water solenoid valve and a mixer motor,a locating hole and two right angled brackets.

-2-

8. Apparatus as claimed wherein the mix is stored in a plastic insulated container not directly connected to the mixing mechanism.

0060946

7

2

3

6

8

5

9

10

4

12

14

14

1

13

15

15

11

16

16

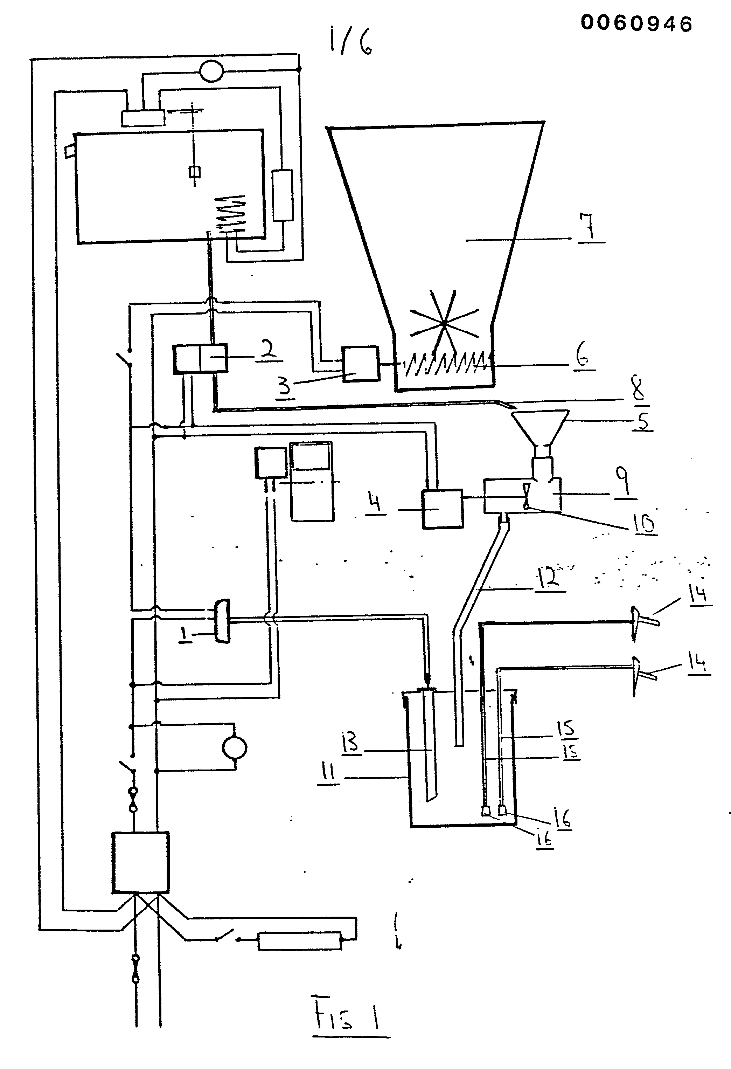

Fig 1

FIG. 2

0060946

38

33

34

35

36

36

37

37

39

48

47

43

44

44

46

45

40

49

41

50

42

50

FIG 3

FIG. 4

4/6

0060946

FIG.5

FIG. 6

0060946

European Patent
Office

**EUROPEAN SEARCH REPORT**

Application number

EP 81 30 1246.5

| Category | Citation of document with indication, where appropriate, of relevant passages | Relevant to claim | CLASSIFICATION OF THE APPLICATION (Int Cl ³) |
|---|---|---|---|
| | DE - U - 7 034 181 (A. FRIEDERICI) <br> * page 5 * | 1,2,4 | A 01 K 9/00 |
| | FR - A1 - 2 458 997 (E. PATUREL) <br> * claim 1 * | 1,2,4 | |
| A | EP - A1 - 0 016 685 (M.A.J. LEGRAIN) <br> * fig. 1 * | | |
| A | US - A - 3 625 183 (A. TARTAR) <br> * fig. 1 * | | TECHNICAL FIELDS SEARCHED (Int. Cl.³) |
| A | US - A - 3 331 357 (M.A.J. LEGRAIN et al.) | | A 01 K 5/00 <br> A 01 K 9/00 |
| A | US - A - 3 314 398 (A.F. LEGOURD) | | |

**DOCUMENTS CONSIDERED TO BE RELEVANT**

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| Berlin | 29-10-1981 | BITTNER |

EPO Form 1503.1  06.78